(19) **Europäisches Patentamt**
**European Patent Office**
**Office européen des brevets**

(11) **EP 3 896 630 A1**

(12) **EUROPEAN PATENT APPLICATION**

(43) Date of publication:
**20.10.2021 Bulletin 2021/42**

(51) Int Cl.:
**G06Q 10/08** *(2012.01)*     **G06Q 10/04** *(2012.01)*
**G06Q 50/28** *(2012.01)*

(21) Application number: **21163961.2**

(22) Date of filing: **22.03.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.04.2020  JP 2020072589**
**23.12.2020  JP 2020214325**

(71) Applicant: **Fujitsu Limited**
**Kawasaki-shi, Kanagawa 211-8588 (JP)**

(72) Inventors:
- **Yamaguchi, Hideshi**
  **Kawasaki-shi, Kanagawa 211-8588 (JP)**
- **Shimada, Noriaki**
  **Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **INFORMATION PROCESSING DEVICE, OPTIMIZATION METHOD, AND NON-TRANSITORY COMPUTER-READABLE STORAGE MEDIUM FOR STORING OPTIMIZATION PROGRAM**

(57)   A method includes: receiving space information regarding a target space of a cargo, the space information being divided into a plurality of sections and defining a route between the plurality of sections and a route from each of the plurality of sections to an entrance; generating, according to the space information, a first constraint condition indicating that there is no other cargo on a route from the cargo to be loaded or to be unloaded to the entrance during loading or unloading of the cargo, a second constraint condition indicating a number of cargos to be loaded and a number of cargos to be unloaded, and a third constraint condition indicating a maximum load capacity of each of the plurality of sections; and determining a cargo arrangement optimizing a degree of instability of the target space based on the first, second , and third constraint conditions.

FIG. 1

EP 3 896 630 A1

**Description**

FIELD

The embodiments discussed herein are related to an information processing device, an optimization method, and an optimization program.

BACKGROUND

When a cargo is placed in a multi-story warehouse, a surface parking space, a vehicle transport ship (may be also referred to as "car carrier ship" or "car carrier"), etc., arrangement of cargos or vehicles upon loading them is optimized in order that the cargos or the like do not block passage when the cargos or the like are loaded and unloaded.
For example, a technique has been known for optimizing a balance, or the like of a single-story ship with an open ceiling, when thin plate coils are transported from a plurality of warehouses to the ship and stacked in two levels on the ship. In addition, a technique has been known for creating, in a case where deliveries are delivered from a plurality of delivery sources to a plurality of delivery destinations, a delivery plan that provides excellent transport efficiency in order that, after the deliveries are unloaded at each delivery destination, another delivery is loaded and delivered to the next delivery destination. Further, a technique has been known for individually determining, in a loading plan (vehicle arrangement) for a car carrier, a vehicle arrangement so as not to form a broken space while avoiding an obstacle in the carrier within a block in the carrier.

SUMMARY

[TECHNICAL PROBLEM]

However, in the abovementioned techniques, when the cargos or the like are loaded and unloaded a plurality of times, there are many constraint conditions, so that it takes much time for optimization. For example, consider a vehicle transport ship into which vehicles are loaded at multiple ports and from which the vehicles are unloaded at multiple ports. In this case, a planning for arranging vehicles in each block within the vehicle transport ship needs to be created, considering that loading and unloading of the vehicles are enabled. Such planning is commonly created manually and takes a great deal of time.
According to one aspect, provided is a solution to reduce a time taken to optimize arrangement of cargos.

[SOLUTION TO PROBLEM]

According to an aspect of the embodiments, provided is an optimization method implemented by a computer. In an example, the method comprising: receiving space information regarding a target space in which a cargo is placed, the space information being divided into a plurality of sections and defining a route between the plurality of sections and a route from each of the plurality of sections to an entrance; generating, according to the space information, a first constraint condition indicating that there is no other cargo on a route from the cargo to be loaded or to be unloaded to the entrance during loading or unloading of the cargo, a second constraint condition indicating a number of cargos to be loaded and a number of cargos to be unloaded, and a third constraint condition indicating a maximum load capacity of each of the plurality of sections; and determining a cargo arrangement that optimizes a degree of instability of the target space on the basis of the first constraint condition, the second constraint condition, and the third constraint condition.

[ADVANTAGEOUS EFFECTS OF INVENTION]

In an aspect of the embodiments, it is possible to reduce a time taken to optimize arrangement of cargos.

BRIEF DESCRIPTION OF DRAWINGS

FIG. 1 is a diagram for describing an information processing device according to a first embodiment;
FIG. 2 is a functional block diagram illustrating a functional configuration of the information processing device according to the first embodiment;
FIG. 3 is a schematic diagram of a vehicle transport ship;
FIG. 4 is a diagram illustrating a graph structure corresponding to a space in the vehicle transport ship;

FIG. 5 is a diagram illustrating a vehicle loading and unloading table;

FIG. 6 is a schematic diagram of blocks divided into cells;

FIG. 7 is a diagram for describing solving by an optimization device and calculation of a vehicle arrangement represented by a solution;

FIG. 8 is a diagram illustrating an optimized vehicle arrangement;

FIG. 9 is a flowchart illustrating a flow of optimization processing; and

FIG. 10 is a diagram illustrating a vehicle loading and unloading table according to a second embodiment;

FIG. 11 is a diagram for describing the order of ports of call according to the second embodiment;

FIG. 12 is a diagram for describing how to specify switching for describing formulation of constraint condition 1 according to the second embodiment;

FIG. 13 is a diagram for describing a general expression of constraint condition 1 according to the second embodiment;

FIG. 14 is a diagram for describing formulation of constraint condition 3 according to the second embodiment;

FIG. 15 is a diagram for describing a general expression of constraint condition 3 according to the second embodiment;

FIG. 16 is a diagram for describing constraint condition 1 when there is a concurrent port;

FIG. 17 is a diagram for describing constraint condition 3 when there is a concurrent port;

FIG. 18 is a flowchart illustrating a flow of optimization processing according to the second embodiment; and

FIG. 19 is a diagram for describing a hardware configuration example.

DESCRIPTION OF EMBODIMENTS

Embodiments of an information processing device, an optimization method, and an optimization program disclosed in the present application will be described in detail with reference to the drawings. Note that the present disclosure is not limited to the embodiments. Furthermore, each of the embodiments may be combined, as appropriate, as long as there is no inconsistency.

[First Embodiment]

[Description of Information Processing Device]

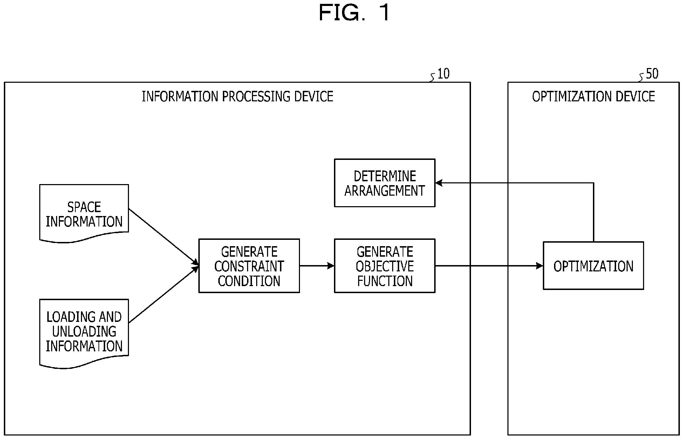

FIG. 1 is a diagram for describing an information processing device 10 according to the first embodiment. The information processing device 10 illustrated in FIG. 1 is one example of a computer device that, when a cargo is placed in a multi-story warehouse, a surface parking space, a vehicle transport ship, etc., optimizes arrangement of cargos or vehicles upon loading them in order that the cargos or the like do not block passage during loading and unloading of the cargos or the like.

In the first embodiment, an example of arrangement of cargos will be described, taking, as an example, a vehicle transport ship into which vehicles are loaded at several ports and from which vehicles are unloaded at several ports in one voyage. Note that the vehicle is an example of a cargo, and the vehicle transport ship is an example of a target space in which the cargo is placed.

As illustrated in FIG. 1, the information processing device 10 receives an input of space information regarding an inside of the vehicle transport ship in which vehicles are placed, the space information being divided into a plurality of sections and defining a route between the plurality of sections and a route from each of the plurality of sections to an entrance. Similarly, the information processing device 10 receives an input of loading and unloading information corresponding to a so-called vehicle loading and unloading table which indicates ports where vehicles are loaded, ports where vehicles are unloaded, and how many vehicles are loaded or unloaded at each port.

Then, the information processing device 10 generates a constraint condition using the input information. For example, the information processing device 10 generates a first constraint condition indicating that there is no other vehicle on the route from a vehicle to be loaded or unloaded to the entrance at the time of loading and unloading vehicles. In addition, the information processing device 10 generates a second constraint condition indicating that the number of vehicles to be loaded and the number of vehicles to be unloaded are specified in advance. Furthermore, the information processing device 10 generates a third constraint condition indicating that vehicles are placed within each of a plurality of sections with a load capacity not exceeding a preset load capacity (maximum load capacity).

The center of gravity of the ship when the vehicles are loaded or unloaded at each port is also important, and it is preferable to make planning so that the center of gravity of the ship is as low as possible in order to reduce a possibility of overturning of the ship. In the present embodiment, the information processing device 10 generates an objective function for calculating the degree of instability of the vehicle transport ship. Thereafter, the information processing device 10 determines the vehicle arrangement that minimizes the objective function under the first constraint condition, the second constraint condition, and the third constraint condition, using an optimization device such as an annealing computer or Ising machine. With this configuration, the information processing device 10 may automatically generate complicated constraint conditions, whereby the time taken to optimize the vehicle arrangement may be shortened.

[Functional Configuration of Information Processing Device]

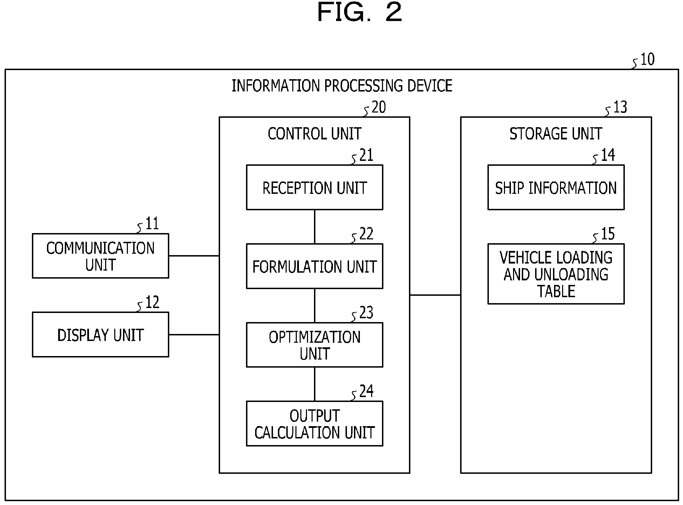

FIG. 2 is a functional block diagram illustrating a functional configuration of the information processing device 10 according to the first embodiment. As illustrated in FIG. 2, the information processing device 10 includes a communication unit 11, a display unit 12, a storage unit 13, and a control unit 20.

The communication unit 11 is a processing unit that controls communication with another device, and is achieved by, for example, a communication interface or the like. For example, the communication unit 11 transmits and receives various kinds of data to and from an external device such as a device used by an administrator or the like.

The display unit 12 is a processing unit that displays various types of information, and is achieved by, for example, a display, a touch panel, or the like. For example, the display unit 12 displays a finally obtained result of vehicle arrangement, a calculated solution result, and the like.

The storage unit 13 is an example of a processing unit that stores various kinds of data, programs executed by the control unit 20, and the like, and is achieved by, for example, a memory, a hard disk, or the like. The storage unit 13 stores ship information 14 and a vehicle loading and unloading table 15.

The ship information 14 is information regarding the vehicle transport ship in which vehicles are placed, the information being divided into a plurality of sections and defining a route between the plurality of sections and a route from each of the plurality of sections to the entrance. For example, the ship information 14 corresponds to information on a graph structure obtained by graphically illustrating a schematic diagram of the vehicle transport ship, etc.

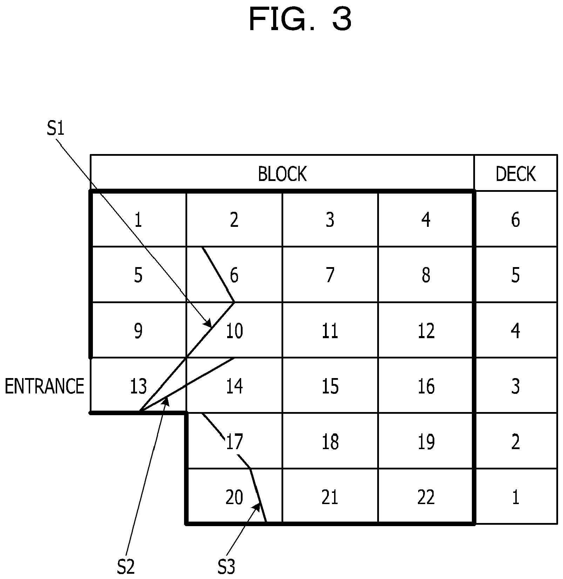

First, the schematic diagram of the vehicle transport ship will be described. FIG. 3 is a schematic diagram of the vehicle transport ship. As illustrated in the schematic diagram of FIG. 3, the vehicle transport ship has six floors from a deck 1 on the first floor to a deck 6 on the sixth floor. Each deck is divided into blocks. The vehicle transport ship has one entrance on the deck 3. The decks are connected by slopes S1, S2, and S3.

Further, the deck 6 is divided into four blocks, blocks 1 to 4, the deck 5 is divided into four blocks, blocks 5 to 8, and the deck 4 is divided into four blocks, blocks 9 to 12. Similarly, the deck 3 is divided into four blocks, blocks 13 to 16, the deck 2 is divided into three blocks, blocks 17 to 19, and the deck 1 is divided into three blocks, blocks 20 to 22.

In addition, the slope S1 is a route from the deck 6 and the deck 5 to the entrance on the deck 3, the slope S2 is a route from the deck 4 to the entrance, and the slope S1 is a route from the deck 2 and the deck 1 to the entrance.

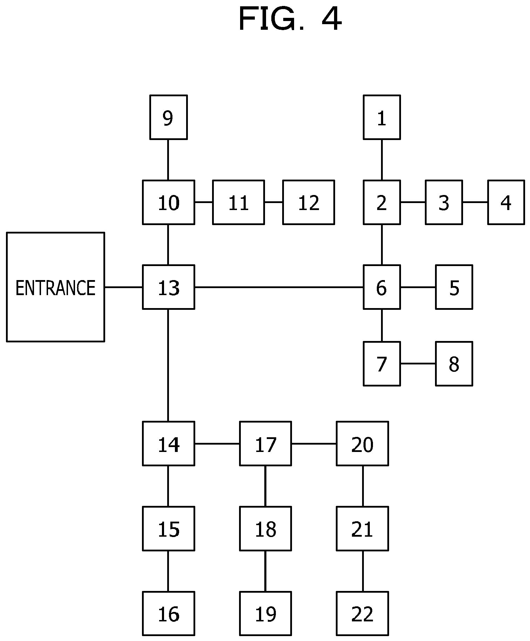

Next, the information on a graph structure obtained by graphically illustrating the schematic diagram of the vehicle transport ship will be described. FIG. 4 is a diagram illustrating a graph structure corresponding to a space in the vehicle transport ship. As illustrated in FIG. 4, the blocks in the same deck are connected to each other. In addition, the blocks 1 to 4 of the deck 6 are connected to the entrance sequentially via the block 2, the block 6, and the block 13. The blocks 5 to 8 of the deck 5 are connected to the entrance sequentially via the block 6 and the block 13. The blocks 9 to 12 of the deck 4 are connected to the entrance sequentially via the block 10 and the block 13.

The blocks 13 to 16 of the deck 3 are connected to the entrance via the block 13. The blocks 17 to 19 of the deck 2 are connected to the entrance sequentially via the block 17, the block 14, and the block 13. The blocks 20 to 22 of the deck 1 are connected to the entrance sequentially via the block 20, the block 17, the block 14, and the block 13.

Note that the ship information 14 includes load information that specifies, for example, the maximum load capacity of each block as well as the information on the graph structure including the deck positions, the block positions, the slope positions, and the like illustrated in FIG. 4.

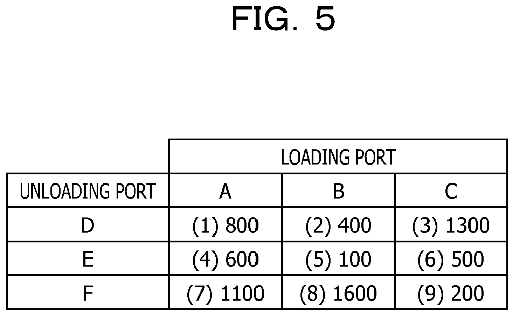

Returning to FIG. 2, the vehicle loading and unloading table 15 is an example of loading and unloading information that defines the order of ports the vehicle transport ship calls at, the number of vehicles to be unloaded, and the like. FIG. 5 is a diagram illustrating the vehicle loading and unloading table 15. As illustrated in FIG. 5, in the vehicle loading and unloading table 15, a loading port where vehicles are loaded, an unloading port where vehicles are unloaded, and the numbers of vehicles to be loaded and unloaded are associated with each other.

Specifically, for example, the vehicle loading and unloading table 15 specifies that the vehicle transport ship stops in the order of a port A → a port B → a port C → a port D → a port E → a port F. In addition, the numbers in the vehicle loading and unloading table 15 indicate the number of vehicles to be loaded and unloaded at each port. For example, 1600 vehicles (8) are loaded at the port B and unloaded at the port F.

The control unit 20 is a processing unit that controls the entire information processing device 10 and is achieved by, for example, a processor or the like. The control unit 20 includes a reception unit 21, a formulation unit 22, an optimization unit 23, and an output calculation unit 24. Note that the reception unit 21, the formulation unit 22, the optimization unit 23, and the output calculation unit 24 may be achieved by an electronic circuit such as a processor, or may be achieved as an example of a process executed by the processor.

The reception unit 21 is a processing unit that receives the ship information 14 and the vehicle loading and unloading table 15. For example, the reception unit 21 receives the ship information 14 and the vehicle loading and unloading table 15 from an administrator terminal or the like via the communication unit 11 and stores them in the storage unit 13. Note that the ship information 14 and the vehicle loading and unloading table 15 may be information artificially generated by the administrator or the like, or information generated using a known tool or the like.

The formulation unit 22 is a processing unit that executes formulation of the constraint conditions and objective function using the ship information 14, the vehicle loading and unloading table 15, etc. Specifically, for example, the formulation unit 22 regards an optimization problem according to the first embodiment as a mathematical optimization problem, and generates a plurality of constraint conditions and an objective function.

(Premise)

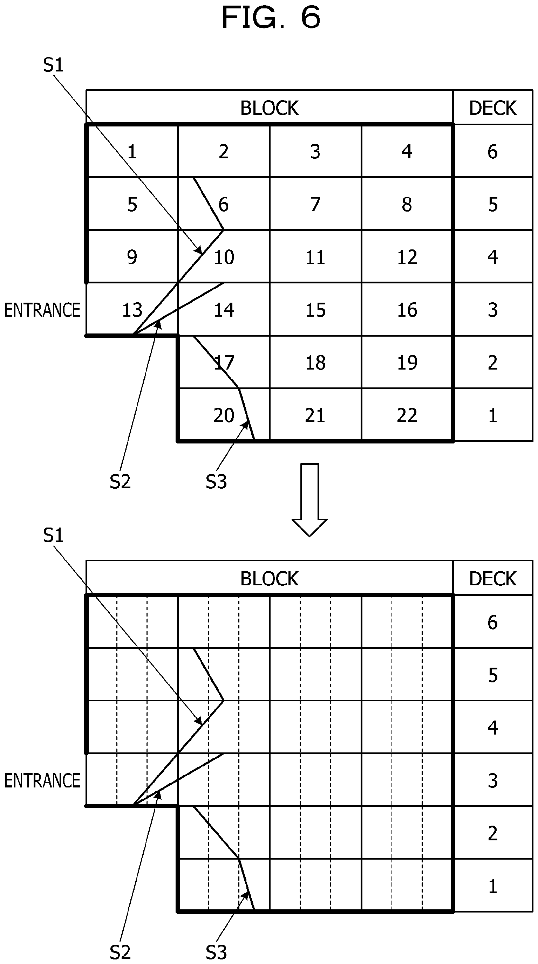

Here, the formulation unit 22 divides each block into cells and assigns binary variables to the respective cells. FIG. 6 is a schematic diagram of the blocks divided into cells. As illustrated in FIG. 6, each block is divided into four cells. Note that the number of divisions (number of cells) is preferably determined by the specifications of the optimization device. For example, if the number of cells is too large, the number of variables increases, and the optimization speed with the optimization device decreases. Therefore, it is preferable to determine the number of cells according to the processing capacity of the optimization device.

Then, the formulation unit 22 defines the definitions of variables and constants as follows. "$x_{ijkm}$" is a value of "1" or "0". Note that, when it is "1", it means that the vehicles loaded at the loading port i and to be unloaded at the unloading port j exist in a cell m in a block k, and when it is "0", it means the other cases. "$c_{ij}$" is the number of vehicles loaded at the loading port i and to be unloaded at the unloading port j. "$b_{km}$" is the maximum load capacity of the cell m in the block k. "M" is the number of loading ports, "N" is the number of unloading ports, "R" is the number of blocks, and "$S_k$" is the number of cells in the block k.

(Constraint condition 1)

Next, the constraint condition 1 will be described. For example, the formulation unit 22 generates the constraint condition 1 indicating that there is no other cargo on the route from the cargo to be loaded or unloaded to the entrance at the time of loading and unloading the cargo. In other words, for example, the formulation unit 22 generates the constraint condition 1 indicating that "when a vehicle passes through a certain block, the vehicle is unable to pass unless there are no vehicles in the block".

For example, when there is a vehicle in a cell, and the block between the cell and the entrance is focused, it is desirable that a vehicle loaded at the loading port preceding the loading port at which the vehicle is loaded does not exist in the block, and a vehicle to be unloaded at the unloading port after the unloading port at which the vehicle is to be unloaded does not exist in the block. Therefore, when there is a vehicle loaded at a loading port p and to be unloaded at an unloading port q in a cell s of a block r, the formulation unit 22 may define a vehicle $y_{pq}$ that blocks the passage by Equation (1), where k' indicates a block between the cell s and the entrance.

$$y_{pq} = \sum_{i=1}^{p-1} \sum_{j=1}^{N} \sum_{k'} \sum_{m=1}^{S_{k'}} x_{ijkm} + \sum_{i=1}^{M} \sum_{j=q+1}^{N} \sum_{k'} \sum_{m=1}^{S_{k'}} x_{ijkm} \qquad \cdots (1)$$

Here, it is desirable that, for a certain $x_{pqrs}$, ($y_{pq} = 0$ when $x_{pqrs} = 1$) and ($y_{pq}$ is an arbitrary value when $x_{pqrs} = 0$), and this may be defined by Equation (2). In that case, ($x_{pqrs} \cdot y_{pq}$) is the minimum. Therefore, it is desirable that Equation (3) that calculates summation for all of p, q, r, and s is established.

$$x_{pqrs} \cdot y_{pq} = 0 \qquad \cdots (2)$$

$$B = \sum_{p=1}^{M} \sum_{q=1}^{N} \sum_{r=1}^{R} \sum_{s=1}^{S_r} (x_{pqrs} \cdot y_{pq}) = 0 \qquad \cdots (3)$$

(Constraint condition 2)

Next, the constraint condition 2 will be described. For example, the formulation unit 22 generates the constraint condition 2 indicating that the number of cargos to be loaded and the number of cargos to be unloaded are specified in advance. That is, for example, the formulation unit 22 generates the constraint condition 2 indicating that "the number of vehicles to be loaded at the loading port and unloaded at the unloading port is the value specified in the vehicle loading and unloading table 15."

For example, it is desirable that the total sum of the number of vehicles loaded at the loading port p and the number of vehicles unloaded at the unloading port q in the entire vehicle transport ship is equal to the value $c_{pq}$ in the vehicle loading and unloading table 15, and this is defined by Equation (4). Therefore, it is desirable that Equation (5) that calculates summation for all of p and q is established.

$$\sum_{k=1}^{R}\sum_{m=1}^{S_k} b_{km} x_{pqkm} = c_{pq} \qquad \cdots (4)$$

$$C = \sum_{p=1}^{M}\sum_{q=1}^{N}\left(\sum_{k=1}^{R}\sum_{m=1}^{S_k} b_{km} x_{pqkm} - c_{pq}\right)^2 = 0 \qquad \cdots (5)$$

(Constraint condition 3)

Next, the constraint condition 3 will be described. For example, the formulation unit 22 generates the constraint condition 3 indicating that the cargo is arranged in each of the plurality of sections with a load capacity not exceeding a preset load capacity. That is, for example, the formulation unit 22 generates the constraint condition 3 indicating that "it is impossible to load vehicles with a load capacity equal to or greater than the maximum load capacity of one cell".

For example, a vehicle involved with one of the ports is present in a cell, but vehicles involved with two ports are not present in the same cell. In other words, for example, for a certain cell s in a certain block r, it is desirable that the sum of all ports is 0 or 1, which is defined by Equation (6). This condition for a certain $x_{pqrs}$ may be defined by Equation (7). Therefore, it is desirable that Equation (8) that calculates summation for all of r and s is established.

$$\sum_{i=1}^{M}\sum_{j=1}^{N} x_{ijrs} = 0 \; or \; 1 \qquad \cdots (6)$$

$$\left(\sum_{i=1}^{M}\sum_{j=1}^{N} x_{ijrs}\right)\left(\sum_{i=1}^{M}\sum_{j=1}^{N} x_{ijrs} - 1\right) = 0 \qquad \cdots (7)$$

$$D = \sum_{r=1}^{R}\sum_{s=1}^{S_r}\left\{\left(\sum_{i=1}^{M}\sum_{j=1}^{N} x_{ijrs}\right)\left(\sum_{i=1}^{M}\sum_{j=1}^{N} x_{ijrs} - 1\right)\right\} = 0 \qquad \cdots (8)$$

(Objective Function)

Next, the objective function will be described. For example, in order to improve the stability of the vehicle transport ship, the formulation unit 22 preferably lowers the position of the center of gravity of the vehicle transport ship as much as possible. Here, the difference between the load capacity of the decks on the upper half of the vehicle transport ship and the load capacity of the decks on the lower half is defined as a value $G_i$ indicating the degree of instability of the vehicle transport ship. That is, for example, in the first embodiment, the definition of $G_i$ is "$G_i$ = (load capacity of an area above the deck 4) - (load capacity of an area below the deck 3)", for example. Therefore, $G_i$ when the vehicle transport ship leaves each port may be defined by Equation (9). For example, $G_1$ in Equation (9) corresponds to the degree of instability when the vehicle transport ship leaves the loading port A. As a result, the objective function may be expressed by Equation (10) using the average of $G_i$.

$$G_1 = \sum_{i=1}^{1} \sum_{j=1}^{N} \left( \sum_{k=1}^{12} \sum_{m=1}^{S_k} b_{km} x_{ijkm} - \sum_{k=13}^{22} \sum_{m=1}^{S_k} b_{km} x_{ijkm} \right)$$

$$G_2 = \sum_{i=1}^{2} \sum_{j=1}^{N} \left( \sum_{k=1}^{12} \sum_{m=1}^{S_k} b_{km} x_{ijkm} - \sum_{k=13}^{22} \sum_{m=1}^{S_k} b_{km} x_{ijkm} \right)$$

$$\cdots \qquad\qquad \cdots (9)$$

$$G_{M+N-2} = \sum_{i=1}^{M} \sum_{j=N-1}^{N} \left( \sum_{k=1}^{12} \sum_{m=1}^{S_k} b_{km} x_{ijkm} - \sum_{k=13}^{22} \sum_{m=1}^{S_k} b_{km} x_{ijkm} \right)$$

$$G_{M+N-1} = \sum_{i=1}^{M} \sum_{j=N}^{N} \left( \sum_{k=1}^{12} \sum_{m=1}^{S_k} b_{km} x_{ijkm} - \sum_{k=13}^{22} \sum_{m=1}^{S_k} b_{km} x_{ijkm} \right)$$

$$G = \frac{G_1 + G_2 + \cdots + G_{M+N-2} + G_{M+N-1}}{M + N - 1} \qquad \cdots (10)$$

As described above, the formulation unit 22 generates the constraint condition 1, the constraint condition 2, the constraint condition 3, and the objective function, and outputs them to the optimization unit 23.

The optimization unit 23 is a processing unit that optimizes the degree of instability of the vehicle transport ship under the constraint condition 1, the constraint condition 2, and the constraint condition 3. Specifically, for example, the optimization unit 23 calculates a solution that minimizes the degree of instability (reduces the degree of instability as much as possible) by solving the constrained optimization problem.

For example, the optimization unit 23 generates an energy function E in Equation (11) which is the sum of the abovementioned constraint condition 1, constraint condition 2, constraint condition 3, and objective function, using preset arbitrary constants ($\beta$, $\gamma$, $\sigma$, $\varepsilon$). Then, the optimization unit 23 inputs the energy function E into an optimization device such as an Ising machine or an annealing computer, and runs the optimization device to calculate a value that minimizes the value of the objective function.

$$E = \beta \sum_{p=1}^{M} \sum_{q=1}^{N} \sum_{r=1}^{R} \sum_{s=1}^{S_r} \left\{ x_{pqrs} \left( \sum_{i=1}^{p-1} \sum_{j=1}^{N} \sum_{k'} \sum_{m=1}^{S_{k'}} x_{ijkm} + \sum_{i=1}^{M} \sum_{j=q+1}^{N} \sum_{k'} \sum_{m=1}^{S_{k'}} x_{ijkm} \right) \right\} \cdots \text{CONSTRAINT CONDITION 1}$$

$$+ \gamma \sum_{p=1}^{M} \sum_{q=1}^{N} \left( \sum_{k=1}^{R} \sum_{m=1}^{S_r} b_{km} x_{pqkm} - c_{pq} \right) \cdots \text{CONSTRAINT CONDITION 2}$$

$$+ \delta \sum_{r=1}^{R} \sum_{s=1}^{S_r} \left\{ \left( \sum_{i=1}^{M} \sum_{j=1}^{N} x_{ijrs} \right) \left( \sum_{i=1}^{M} \sum_{j=1}^{N} x_{ijrs} - 1 \right) \right\} \cdots \text{CONSTRAINT CONDITION 3}$$

$$+ \varepsilon \left( \frac{G_1 + G_2 + \cdots + G_{M+M-2} + G_{M+N-1}}{M + N - 1} \right) \cdots \text{OBJECTIVE FUNCTION}$$

$$\left( \text{WHERE, } G_p = \sum_p \left( \sum_{k=1}^{12} \sum_{m=1}^{S_k} b_{km} x_{ijkm} - \sum_{k=13}^{22} \sum_{m=1}^{S_k} b_{km} x_{ijkm} \right) \text{ AND } \beta, \gamma, \delta, \varepsilon \text{ ARE CONSTANTS} \right) \cdots (11)$$

The output calculation unit 24 is a processing unit that calculates an optimum vehicle arrangement. Specifically, for example, the output calculation unit 24 determines the optimum vehicle arrangement that minimizes the degree of instability of the vehicle transport ship using the solution result obtained by the optimization unit 23 with the optimization device. Then, the output calculation unit 24 displays the determined vehicle arrangement on the display unit 12 or stores it in the storage unit 13.

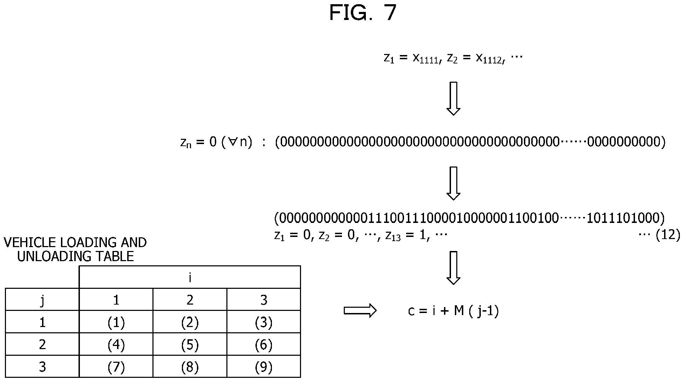

FIG. 7 is a diagram for describing solving by the optimization device and calculation of the vehicle arrangement represented by the solution. As illustrated in FIG. 7, the output calculation unit 24 defines a binary variable $z_n$, and associates $z_n$ with $x_{ijkm}$, such as $z_1 = x_{1111}$ and $z_2 = x_{1112}$. For example, when the optimization device performs calculation using $z_n = 0$, (000 ... 000) as an initial solution, the solution ($z_1 = 1$, $z_2 = 0$..., $z_{13} = 1$) represented by Equation (12) in FIG. 7 is obtained.

Here, there is a vehicle when $z_n = 1$. Therefore, the output calculation unit 24 extracts n that provides $z_n = 1$, and obtains corresponding i, j, k, and m. In this way, the output calculation unit 24 may calculate the loading port i, the unloading port j, and the cell m in the block k where the vehicle exists. For example, if the number written in an intersection in the vehicle loading and unloading table 15 where the loading port is defined as i and the unloading port is defined as j is defined as c, and the number of loading ports is M, the output calculation unit 24 may represent c as "c = i + M(j - 1)". Therefore, the output calculation unit 24 may indicate that the vehicle c exists in the cell m in the block k.

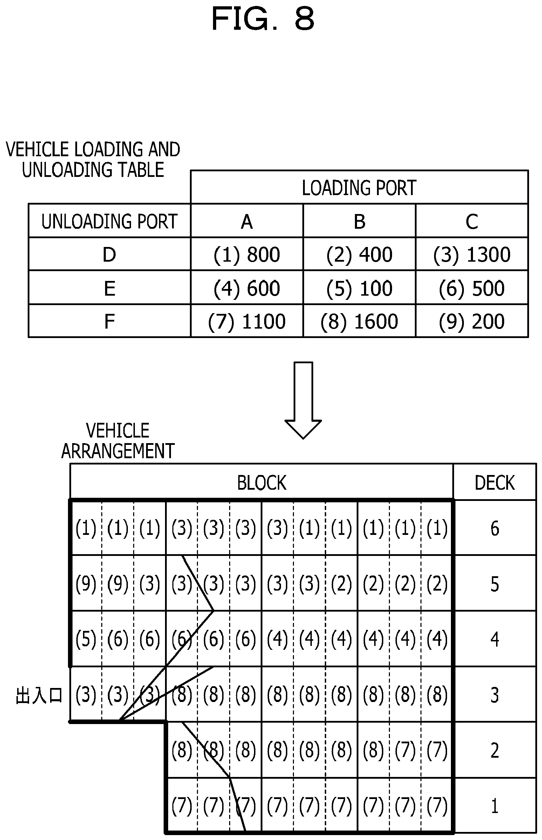

By executing the above-mentioned processing, the output calculation unit 24 calculates the loading port i, the unloading port j, and the cell m in the block k in which the vehicle exists, and associates the calculated results with the schematic diagram, thereby determining the vehicle arrangement. FIG. 8 is a diagram illustrating an optimized vehicle arrangement. As illustrated in FIG. 8, the output calculation unit 24 generates a schematic diagram indicating the arrangement of each of vehicles (1) to (9) illustrated in the vehicle loading and unloading table 15 and displays the generated schematic diagram on the display unit 12. The example of the schematic diagram of FIG. 8 indicates that, for example, 800 vehicles (1) loaded at the loading port A and to be unloaded at the unloading port D are placed on the deck 6, and 1300 vehicles (3) loaded at the loading port C and to be unloaded at the unloading port D are placed across the deck 6, the deck 5, and the deck 3.

[Flow of processing]

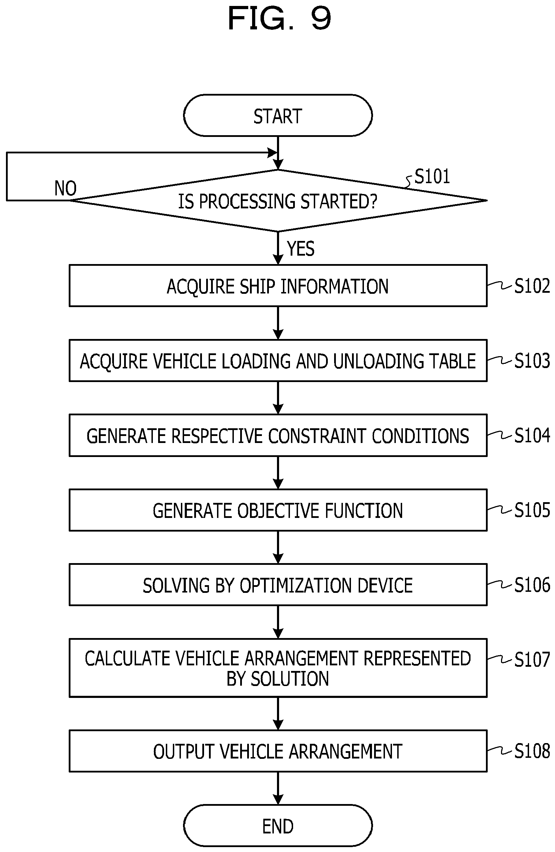

FIG. 9 is a flowchart illustrating a flow of optimization processing. As illustrated in FIG. 9, when the processing is started (S101: Yes), the reception unit 21 of the information processing device 10 acquires the ship information 14 (S102) and the vehicle loading and unloading table 15 (S103).

Subsequently, the formulation unit 22 generates, on the basis of the ship information 14 and the vehicle loading and unloading table 15, the respective constraint conditions (S104) and the objective function (S105). Then, the optimization unit 23 generates an energy function obtained by adding the respective constraint conditions and the objective function, inputs the generated energy function to the optimization device, and acquires the result of the solution by the optimization device (S106).

After that, the output calculation unit 24 calculates the vehicle arrangement represented by the result (solution) of solving by the optimization device (S107), and outputs the vehicle arrangement obtained by the calculation (S108).

[Effects]

As described above, the information processing device 10 regards the problem as a mathematical optimization problem, determines constraint conditions and objective function from the input data, and solves the problem using the optimization device. Thus, the information processing device 10 is capable of shortening the time taken for optimization even when vehicles are loaded and unloaded multiple times. For example, the information processing device 10 may obtain, with the optimization device, a vehicle arrangement satisfying the constraints by solving, only within about 5 minutes, a problem that would need 30 minutes to be manually solved.

[Second Embodiment]

As described above, the information processing device 10 may automatically generate the constraint conditions of the mathematical optimization problem which are difficult to set in a general manner while considering various conditions, using a schematic diagram of a moving body such as a vehicle transport ship, a vehicle loading and unloading table, and the like. Further, the information processing device 10 may generate a complicated vehicle arrangement by automatically solving a mathematical optimization problem in consideration of constraint conditions, and output the same to a predetermined device or a display or the like, output the same as a proposal of vehicle arrangement, or present the same to the operating company of the vehicle transport ship. As a result, the information processing device 10 may achieve a reduction in creation time of the constraint conditions, and shorten the time required for optimizing the cargo arrangement as compared with a common technology such as a technology unable to automatically create constraint conditions.

Meanwhile, the first embodiment describes an example in which unloading (carrying-out) of vehicles takes place after loading (carrying-in) of vehicles is completed. However, there may be a case where there is an unloading port before the last loading port. In the second embodiment, a method for more effectively using a free space in such a case will be described. Note that the functional configuration of an information processing device 10 according to the second embodiment is the same as that of the first embodiment.

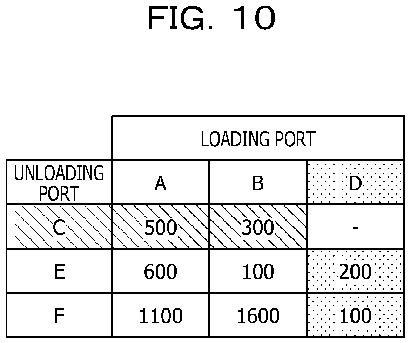

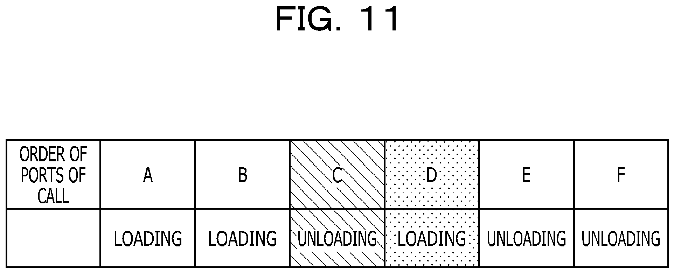

FIG. 10 is a diagram for describing a vehicle loading and unloading table 15 according to the second embodiment, and FIG. 11 is a diagram for describing the order of ports of call according to the second embodiment. Note that this order of ports of call may also be included in the vehicle loading and unloading table 15.

As illustrated in FIG. 10, in the vehicle loading and unloading table 15, a loading port where vehicles are loaded, an unloading port where vehicles are unloaded, and the respective numbers of vehicles to be loaded and unloaded are associated with each other. Further, the vehicle loading and unloading table 15 defines that the loading ports are port A, port B, and port D, and the unloading ports are port C, port E, and port F. In addition, the port-of-call table in FIG. 11 defines that the vehicle transport ship makes a port call in the order of "port A, port B, port C, port D, port E, and port F". Considering these definitions, 2200 (= 500 + 600 + 1100) vehicles will be loaded at port A, and 2000 (= 300 + 100 + 1600) vehicles will be loaded at port B. Thereafter, 800 (= 500 + 300) vehicles will be unloaded at port C, 300 (= 200 + 100) vehicles will be loaded at port D, then 900 (600 + 100 + 200) vehicles will be unloaded at port E, and 2800 (1100 + 1600 + 100) vehicles will be unloaded at port F.

Under such conditions, if the method according to the first embodiment is used, there is a possibility that the vehicles loaded after the vehicles are unloaded at port C will not be placed in the free space created due to unloading at port C.

In view of this, in the second embodiment, constraint condition 1 and constraint condition 3 which are subdivided according to condition are generated, and optimization is performed. This configuration enables further effective use of a free space, whereby efficient vehicle transportation is achieved. Specifically, in the second embodiment, constraint condition 1 is formulated separately before and after switching from unloading port to loading port, and constraint condition 3 is formulated for checking the load capacity of each cell at a timing at which the load capacity in the ship is at a maximum. Note that constraint condition 2 is the same as that of the first embodiment.

(Formulation of constraint condition 1)

First, constraint condition 1 will be described which indicates that there is no other cargo on the route from the cargo to be loaded or unloaded to the entrance at the time of loading (carrying in) and unloading (carrying out) the cargo. Regarding constraint condition 1, the formulation unit 22 formulates constraint condition 1 separately at a first timing at which the load capacity of cargo is at a minimum, that is, before and after switching from unloading port to loading port. That is, for example, the formulation unit 22 adds, to constraint condition 1 of the first embodiment, a condition for switching the route to the entrance before and after the first timing at which the load capacity of cargo is at a minimum.

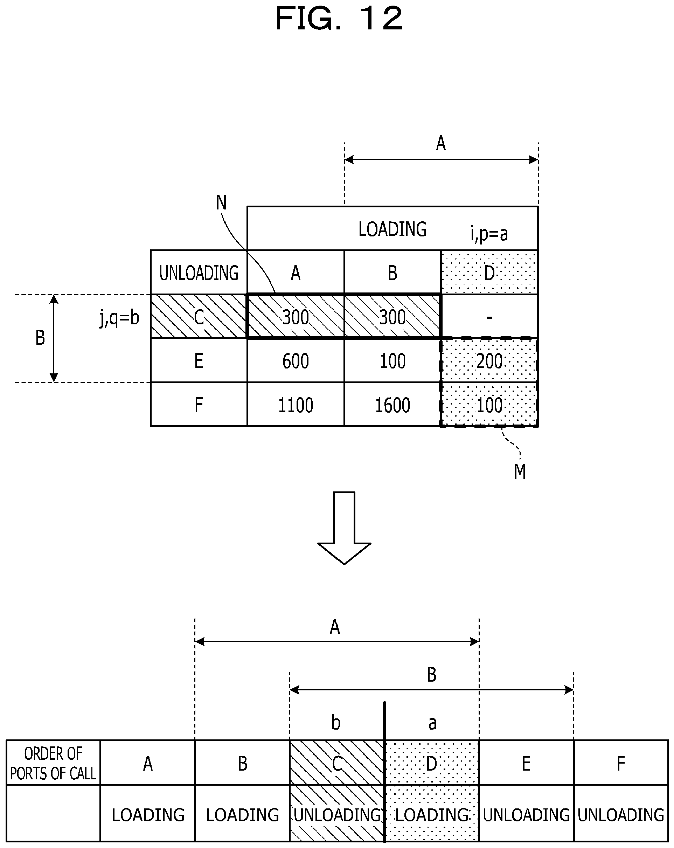

Specifically, the formulation unit 22 determines a delimiting point of the order of ports of call as a switching. FIG. 12 is a diagram for describing how to specify switching for describing formulation of constraint condition 1 according to the second embodiment. As illustrated in FIG. 12, the formulation unit 22 determines, as a switching candidate A, the point between port B and port D where the number of vehicles placed in the ship changes (where the vehicles are unloaded) from among the loading ports, and determines, as a switching candidate B, the point between port C and port E where the number of vehicles placed in the ship changes (where the vehicles are loaded) from among the unloading ports. Then, the formulation unit 22 specifies the point between port C and port D which is common in both cases as a switching point.

In other words, for example, the formulation unit 22 specifies the boundary between unloading and loading where the load capacity in the ship is minimized as a switching point in the order of ports of call.

Subsequently, the formulation unit 22 creates constraint condition 1 separately. Specifically, as illustrated in FIG. 12, the formulation unit 22 sets an index of port C that is located before the switching from unloading port to loading port as "j,q = b", and sets an index of port D which is located after the switching from unloading port to loading port as "i,p = a". Note that the load capacity in the ship at the switching point is minimized.

Here, at the timing at which vehicles are loaded at port D, unloading of vehicles has been completed at port C, and thus, there is no need to consider a region N. Further, the timing at which vehicles are unloaded at port C is before the timing at which vehicles are loaded at port D, and thus, there is no need to consider a region M.

That is, as illustrated in FIG. 12, when a vehicle $x_{pqrs}$ in the region N corresponding to "q $\leq$ b" in the vehicle loading and unloading table 15 is unloaded, vehicles in the region M corresponding to "i $\geq$ a" are not yet loaded after port D, and thus, the formulation unit 22 determines that there is no obstacle. Therefore, the formulation unit 22 defines a vehicle $y_{pq}$ that blocks passage by Equation (12).

$$y_{pq}{}^{1} = \sum_{i=1}^{p-1} \sum_{j=1}^{N} \sum_{k'} \sum_{m=1}^{S_{k'}} x_{ijkm} + \sum_{i=1}^{a-1} \sum_{j=q+1}^{N} \sum_{k'} \sum_{m=1}^{S_{k'}} x_{ijkm} \qquad \cdots (12)$$

(WHEN q $\leq$ b)

In addition, when the vehicle $x_{pqrs}$ in the region M corresponding to "p $\geq$ a" in the vehicle loading and unloading table 15 is loaded, vehicles in the region N corresponding to "j $\leq$ b" are not present before port C, and thus, the formulation unit 22 determines that there is no obstacle. Therefore, the formulation unit 22 defines a vehicle $y_{pq}$ that blocks passage by Equation (13).

$$y_{pq}{}^{2} = \sum_{i=1}^{p-1} \sum_{j=b+1}^{N} \sum_{k'} \sum_{m=1}^{S_{k'}} x_{ijkm} + \sum_{i=1}^{M} \sum_{j=q+1}^{N} \sum_{k'} \sum_{m=1}^{S_{k'}} x_{ijkm} \qquad \cdots (13)$$

(WHEN p $\geq$ a)

Further, the formulation unit 22 defines the vehicle $y_{pq}$ that blocks the passage when the vehicle $x_{pqrs}$ corresponding to a region "p < a, q > b" other than the region N and the region M in the vehicle loading and unloading table 15 is loaded and unloaded by Equation (14) similar to Equation (1) described above in the first embodiment.

$$y_{pq}{}^{3} = \sum_{i=1}^{p-1} \sum_{j=1}^{N} \sum_{k'} \sum_{m=1}^{S_{k'}} x_{ijkm} + \sum_{i=1}^{M} \sum_{j=q+1}^{N} \sum_{k'} \sum_{m=1}^{S_{k'}} x_{ijkm} \qquad \cdots (14)$$

(WHEN p < a AND q > b)

Therefore, since the formulation unit 22 needs to set $y_{pq}$ = 0 when $x_{pqrs}$ = 1 in all cases represented by Equations (12), (13), and (14), the formulation unit 22 defines so that B in Equation (15) is minimized.

$$B = \sum_{p=1}^{M}\sum_{q=1}^{b}\sum_{r=1}^{R}\sum_{s=1}^{S_r}(x_{pqrs}\cdot y_{pq}{}^1) + \sum_{p=a}^{M}\sum_{q=1}^{N}\sum_{r=1}^{R}\sum_{s=1}^{S_r}(x_{pqrs}\cdot y_{pq}{}^2) + \sum_{p=1}^{a-1}\sum_{q=b+1}^{N}\sum_{r=1}^{R}\sum_{s=1}^{S_r}(x_{pqrs}\cdot y_{pq}{}^3) \quad \cdots (15)$$

(Generalization of constraint condition 1)

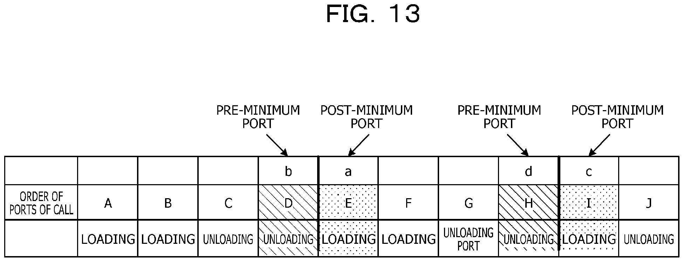

Next, the formulation unit 22 expresses the formulation of constraint condition 1 represented by Equation (15) as a general expression. FIG. 13 is a diagram for describing a general expression of constraint condition 1 according to the second embodiment. FIG. 13 illustrates the order of ports of call in association with loading or unloading process. That is, the example of FIG. 13 defines that the ship makes a port call in the order from port A to port J, and loading takes place at port A.

In such a condition, the formulation unit 22 specifies the boundary between port D and port E and the boundary between port H and port I as a timing before and after the switching from unloading port to loading port. Here, since the load capacity on the ship has a minimum value at these boundaries, port D and port H are referred to as a pre-minimum port, and port E and port I are referred to as a post-minimum port.

Under this condition, the formulation unit 22 defines Equation (15) as Equation (16), and $y_{pq}$ in Equation (16) may be generalized as represented by Equation (17) using function $J_1(p)$ and function $Mi(p)$. Here, the function $J_1(p)$ is a function that returns an index q + 1 of the nearest pre-minimum port among the ports before the loading port p, and returns 1 if there is no pre-minimum port before the loading port p. In addition, the function $Mi(p)$ is a function that returns an index p - 1 of the nearest post-minimum port among the ports after the unloading port q, and returns M if there is no post-minimum port after the unloading port q.

$$B = \sum_{p=1}^{M}\sum_{q=1}^{N}\sum_{r=1}^{R}\sum_{s=1}^{S_r}(x_{pqrs}\cdot y_{pq}) \qquad \cdots (16)$$

$$y_{pq} = \left(\sum_{i=1}^{p-1}\sum_{j=J_1(p)}^{N} + \sum_{i=1}^{M_1(q)}\sum_{j=q+1}^{N}\right)\sum_{k'}\sum_{m=1}^{S_{k'}} x_{ijkm} \qquad \cdots (17)$$

(Formulation of constraint condition 3)

Next, constraint condition 3 will be described which indicates that the cargo is placed in each of a plurality of sections with a load capacity not exceeding a preset load capacity. Regarding constraint condition 3 in the first embodiment, the formulation unit 22 adds a condition for checking the load capacity of each cell at a second timing at which the load capacity in the ship is at a maximum.

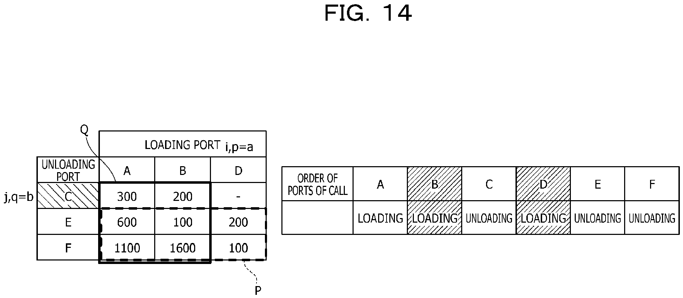

FIG. 14 is a diagram for describing formulation of constraint condition 3 according to the second embodiment. Since the format and information of FIG. 14 are the same as those of FIGs. 10 and 11, detailed description thereof will be omitted. Constraint condition 3 defines that it is impossible to load a vehicle with a load capacity equal to or greater than the maximum load capacity in one cell. From this, the formulation unit 22 determines that it is sufficient to check whether or not there are vehicles with a load capacity equal to or greater than the maximum load capacity in each cell at the timing at which the load capacity in the ship is at a maximum, and specifies the timing of switching from loading to unloading.

That is, for example, the formulation unit 22 specifies points at which the ship leaves port B and port D as the timing. Therefore, the formulation unit 22 determines whether or not the load capacity of a region Q in FIG. 14 does not exceed the upper limit of the load capacity during switching from port B to port C, and determines whether or not the load capacity of a region P in FIG. 14 does not exceed the upper limit of the load capacity during switching from port D to port E. As a result, Equation (18) is established. Therefore, it is sufficient that Equation (19) for obtaining sum of all r and s is minimized.

$$\left(\sum_{i=1}^{a-1}\sum_{j=1}^{N}x_{ijrs}\right)\left(\sum_{i=1}^{a-1}\sum_{j=1}^{N}x_{ijrs}-1\right)=0 \quad \text{AND} \quad \left(\sum_{i=1}^{M}\sum_{j=b+1}^{N}x_{ijrs}\right)\left(\sum_{i=1}^{M}\sum_{j=b+1}^{N}x_{ijrs}-1\right)=0 \qquad \cdots(18)$$

$$D=\sum_{r=1}^{R}\sum_{s=1}^{S_r}\left\{\left(\sum_{i=1}^{a-1}\sum_{j=1}^{N}x_{ijrs}\right)\left(\sum_{i=1}^{a-1}\sum_{j=1}^{N}x_{ijrs}-1\right)+\left(\sum_{i=1}^{M}\sum_{j=b+1}^{N}x_{ijrs}\right)\left(\sum_{i=1}^{M}\sum_{j=b+1}^{N}x_{ijrs}-1\right)\right\} \qquad \cdots(19)$$

(Generalization of constraint condition 3)

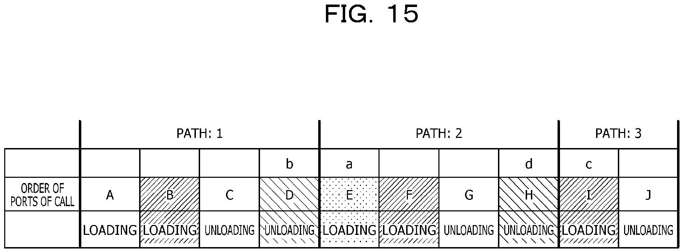

Next, the formulation unit 22 expresses the formulation of constraint condition 3 represented by Equation (19) as a general expression. Specifically, the formulation unit 22 defines a general expression using FIG. 15 in a case where there is a plurality of unloading ports before the last loading port. FIG. 15 is a diagram for describing a general expression of constraint condition 3 according to the second embodiment. Since the order of ports of call illustrated in FIG. 15 is the same as that in FIG. 13, detailed description thereof will be omitted.

As illustrated in FIG. 15, the formulation unit 22 divides the order of ports of call into regions (paths) separated by a minimum port. In FIG. 15, ports A, B, C, and D belong to path 1, ports E, F, G, and H belong to path 2, and ports I and J belong to path 3. Each path has one maximum port (port B, port F, and port I). Then, since it is sufficient that D in the above Equation (19) is minimized in each path, the formulation unit 22 is capable of generalizing constraint condition 3 as in Equation (20) by using Equation (16).

$$D=\sum_{r=1}^{R}\sum_{s=1}^{S_r}\sum_{n\in P}\left\{\left(\sum_{i=1}^{M_3(n)}\sum_{j=J_3(n)}^{N}x_{ijrs}\right)\left(\sum_{i=1}^{M_3(n)}\sum_{j=J_3(n)}^{N}x_{ijrs}-1\right)\right\} \qquad \cdots(20)$$

Note that, "n" in Equation (20) indicates the index of a path, and "P" indicates a set of paths. Further, the function $M_3(n)$ is a function that returns an index p - 1 of the post-minimum port in the path n + 1, and returns M when the path n + 1 does not exist. In addition, the function $J_3(n)$ is a function that returns an index q + 1 of the pre-minimum port in the path n - 1, and returns 1 when the path n - 1 does not exist.

(How to address concurrent port)

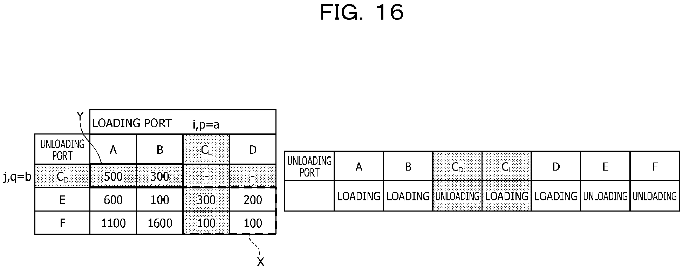

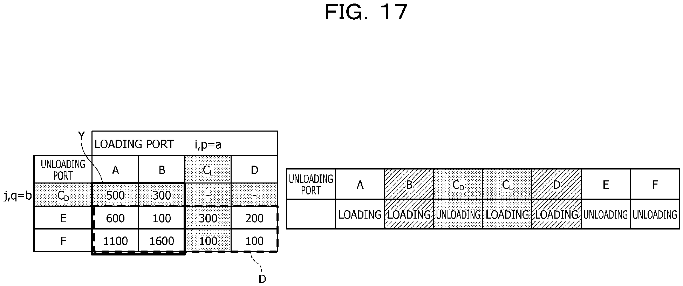

Meanwhile, there may be a port (concurrent port) where loading and unloading both take place, in addition to the case where the unloading port and the loading port are different. A constraint condition in such a case will be considered. FIG. 16 is a diagram for describing constraint condition 1 when there is a concurrent port, and FIG. 17 is a diagram for describing constraint condition 3 when there is a concurrent port. Note that FIGs. 16 and 17 illustrate examples in which loading and unloading take place at port C.

As illustrated in FIG. 16, the formulation unit 22 considers that concurrent port C is divided into two ports, and unloading port $C_D$ where the unloading process is performed and loading port $C_L$ where the loading process is performed are continuous. As a result, unloading port $C_D$ is the pre-minimum port, and loading port $C_L$ is the post-minimum port. Therefore, when the vehicle $x_{pqrs}$ in a region Y corresponding to "q ≤ b" in the vehicle loading and unloading table 15 is unloaded, vehicles in a region X corresponding to "i ≥ a" are not yet loaded, and thus, there is no obstacle. In addition, when the vehicle $x_{pqrs}$ in the region X corresponding to "p ≥ a" in the vehicle loading and unloading table 15 is loaded, vehicles in the region Y corresponding to "j ≤ b" are not present, and thus, there is no obstacle.

In this way, the formulation unit 22 divides concurrent port C into pre-minimum port $C_D$ and post-minimum port $C_L$ with respect to constraint condition 1, and therefore, the formulation unit 22 may achieve formulation and generalization by equations similar to Equation (16) and Equation (17) described above, even when there is concurrent port C.

Further, as illustrated in FIG. 17, the timing at which the load capacity on the ship is at a maximum is when the ship leaves port B and port D which are ports before unloading. Therefore, there is a need to control loading so that the load capacity of vehicles within the region Y does not exceed the upper limit when the ship leaves port B and so that the load capacity of vehicles within the region D does not exceed the upper limit when the ship leaves port D.

In this way, even when there is concurrent port C, the formulation unit 22 divides concurrent port C into pre-minimum port $C_D$ and post-minimum port $C_L$ with respect to constraint condition 3, whereby the timing at which the load capacity is at a maximum can be subdivided. Accordingly, the formulation unit 22 may achieve formulation and generalization by an equation similar to Equation (20) described above.

(Optimization)

As described above, the information processing device 10 inputs an energy function E represented by Equation (21) in which Equations (16) and (17) are used for constraint condition 1 and Equation (20) is used for constraint condition 3 into an optimization device such as an Ising machine or an annealing computer, and runs the optimization device. Note that "β, γ, σ" are arbitrary constants set in advance, and constraint condition 2 is the same as that represented by Equation (5) of the first embodiment.

$$
\begin{aligned}
E = \beta \sum_{p=1}^{M} \sum_{q=1}^{N} \sum_{r=1}^{R} \sum_{s=1}^{S_r} \left\{ x_{pqrs} \left( \left( \sum_{i=1}^{p-1} \sum_{j=J_1(p)}^{N} + \sum_{i=1}^{M_1(q)} \sum_{j=q+1}^{N} \right) \sum_{k'}^{} \sum_{m=1}^{S_{k'}} x_{ijkm} \right) \right\} &\quad \cdots \quad \text{CONSTRAINT CONDITION 1} \\[2ex]
+\gamma \sum_{p=1}^{M} \sum_{q=1}^{N} \left( \sum_{k=1}^{R} \sum_{m=1}^{S_k} b_{km} x_{pqkm} - c_{pq} \right)^2 &\quad \cdots \quad \text{CONSTRAINT CONDITION 2} \\[2ex]
+\delta \sum_{r=1}^{R} \sum_{s=1}^{S_r} \sum_{n \in P} \left\{ \left( \sum_{i=1}^{M_3(n)} \sum_{j=J_3(n)}^{N} x_{ijrs} \right) \left( \sum_{i=1}^{M_3(n)} \sum_{j=J_3(n)}^{N} x_{ijrs} - 1 \right) \right\} &\quad \cdots \quad \text{CONSTRAINT CONDITION 3} \\[2ex]
\text{(WHERE } \beta, \gamma, \delta \text{ ARE CONSTANTS)} &
\end{aligned}
$$

$$\cdots (21)$$

Although the objective function is omitted here, the information processing device 10 may generate an energy function similar to that in Equation (11) using the objective function of Equation (10) described in the first embodiment, and calculate a value that minimizes the value of the objective function by executing optimization.

(Flow of processing)

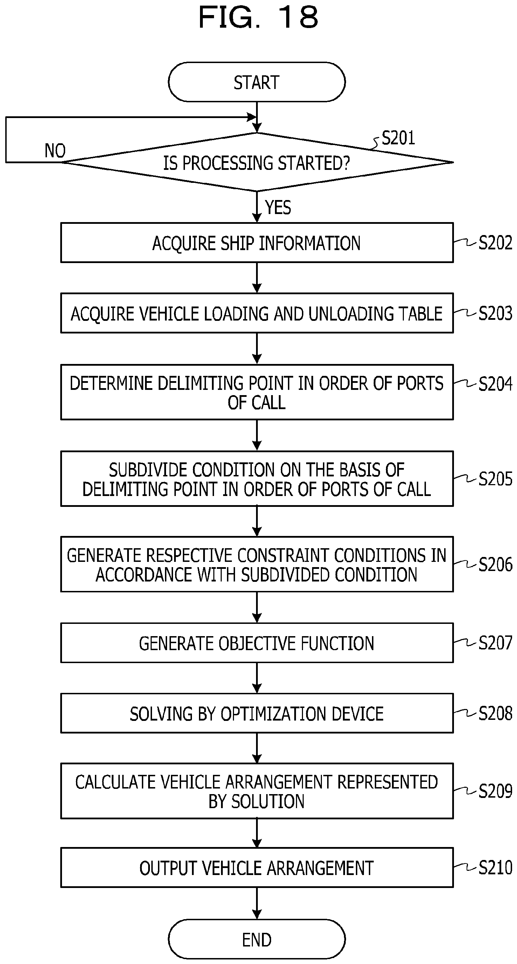

FIG. 18 is a flowchart illustrating a flow of optimization processing according to the second embodiment. As illustrated in FIG. 18, when the processing is started (S201: Yes), the reception unit 21 of the information processing device 10 acquires the ship information 14 (S202) and the vehicle loading and unloading table 15 (S203).
Subsequently, the formulation unit 22 determines delimiting points in the order of ports of call which are the respective timings described above on the basis of the ship information 14 and the vehicle loading and unloading table 15 (S204), subdivides conditions on the basis of the delimiting points in the order of ports of call (S205), and generates respective constraint conditions in accordance with the subdivided conditions (S206). Similarly, the formulation unit 22 generates an objective function (S207).
Then, the optimization unit 23 generates an energy function obtained by adding the respective constraint conditions and the objective function, inputs the generated energy function to the optimization device, and acquires the result of the solution by the optimization device (S208). Thereafter, the output calculation unit 24 calculates the vehicle arrangement represented by the result (solution) of solving by the optimization device (S209), and outputs the vehicle arrangement obtained by the calculation (S210).

(Effects)

As described above, even if there is an unloading port before the last loading port or there is a concurrent port, the information processing device 10 generates constraint condition 1 and constraint condition 3 by subdividing conditions, thereby being capable of determining vehicle arrangement which enables efficient use of a free space after unloading.

[Third Embodiment]

While the embodiments have been described above, the embodiments may be implemented in various different modes in addition to the modes described above.

[Numerical values, etc.]

The number of vehicles, the number of ports, the diagram illustrating the configuration inside the vehicle transport ship, etc. used in the abovementioned embodiments are merely examples and may be arbitrarily changed. Further, although the above embodiments describe an example in which each block in the vehicle transport ship is divided into a plurality of cells, the embodiments are not limited thereto, and one block may include only one cell. Further, as the optimization device for performing optimization, an external device connected to the information processing device 10 using various buses, networks, or the like may also be used, or a processor or the like built in the information processing device 10 may also be used. Note that various known methods are applicable as a method for optimizing the energy function and the objective function. In addition, the center of gravity is an example of an index of the degree of instability.

[Cargo]

The above embodiments have been described above, taking the vehicle transport ship as an example. However, the embodiments are not limited thereto, and various cargos and spaces such as a multi-story warehouse, a surface parking space, and a cargo storage may be used as targets. Note that a cargo is not limited to a vehicle, and various kinds of deliveries such as cardboard boxes may be treated in the same manner. Note that examples of the degree of instability of the target space include not only the center of gravity of the moving body that carries cargo, but also an appropriate position and center of gravity of the warehouse in which the cargo is placed, and the like.

[System]

Pieces of information including a processing procedure, a control procedure, a specific name, various types of data, and parameters described above or illustrated in the drawings may be optionally changed unless otherwise specified.
In addition, the respective constituent elements of each device illustrated in the drawings are functionally conceptual and do not necessarily have to be physically configured as illustrated in the drawings. In other words, specific forms of distribution and integration of each device are not limited to those illustrated in the drawings. That is, for example, all or a part of the devices may be configured by being functionally or physically distributed and integrated in optional units according to various types of loads, usage situations, or the like. Note that the reception unit 21 is an example of a reception unit, the formulation unit 22 is an example of an acquisition unit, a specifying unit, and a generation unit, and the optimization unit 23 and the output calculation unit 24 are examples of a determination unit.
Furthermore, all or any part of individual processing functions performed in each device may be implemented by a central processing unit (CPU) and a program analyzed and executed by the CPU, or may be implemented as hardware by wired logic.

[Hardware]

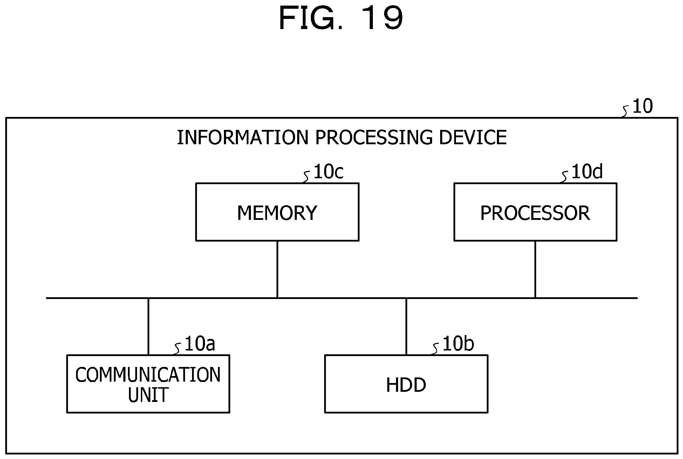

Next, a hardware configuration example of the information processing device 10 will be described. FIG. 19 is a diagram for describing a hardware configuration example. As illustrated in FIG. 19, the information processing device 10 includes a communication device 10a, a hard disk drive (HDD) 10b, a memory 10c, and a processor 10d. Furthermore, the respective units illustrated in FIG. 19 are interconnected by a bus or the like.
The communication device 10a is a network interface card or the like and communicates with another server. The HDD 10b stores programs and databases (DBs) for activating the functions illustrated in FIG. 2.
The processor 10d reads a program that executes processing similar to the process of each processing unit illustrated in FIG. 2 from the HDD 10b or the like, and develops the read program in the memory 10c, thereby activating a process that performs each function described with reference to FIG. 2 or the like. For example, this process executes a function similar to the function of each processing unit included in the information processing device 10. Specifically, for example, the processor 10d reads a program having the same functions as the reception unit 21, the formulation unit 22, the optimization unit 23, the output calculation unit 24, etc. from the HDD 10b or the like. Then, the processor 10d executes a process of executing the processing similar to the processing of the reception unit 21, the formulation unit 22, the optimization unit 23, the output calculation unit 24, and the like.
As described above, the information processing device 10 operates as an information processing device that executes the optimization method by reading and executing a program. Further, the information processing device 10 may also implement functions similar to the functions of the abovementioned embodiments by reading the program described above from a recording medium by a medium reading device and executing the read program described above. Note that the program referred to in other embodiments is not limited to being executed by the information processing device 10. For example, the embodiments may be similarly applied to a case where another computer or server executes the program, or a case where such computer and server cooperatively execute the program.

[CITATION LIST]

[PATENT LITERATURE]

Japanese Laid-open Patent Publication No. 10-305929.
Japanese Laid-open Patent Publication No. 2005-112609.
Japanese Laid-open Patent Publication No. 1-127526.

REFERENCE SIGNS LIST

    10 Information processing device
    11 Communication unit
    12 Display unit
    13 Storage unit
    14 Ship information
    15 Vehicle loading and unloading table
    20 Control unit
    21 Reception unit
    22 Formulation unit
    23 Optimization unit
    24 Output calculation unit

**Claims**

1.  An information processing device comprising:

    a reception unit that receives space information regarding a target space in which a cargo is placed, the space information being divided into a plurality of sections and defining a route between the plurality of sections and a route from each of the plurality of sections to an entrance;
    a generation unit that generates, according to the space information, a first constraint condition indicating that there is no other cargo on a route from the cargo to be loaded or to be unloaded to the entrance during loading or unloading of the cargo, a second constraint condition indicating a number of cargos to be loaded and a number of cargos to be unloaded, and a third constraint condition indicating a maximum load capacity of each of the plurality of sections; and
    a determination unit that determines a cargo arrangement that optimizes a degree of instability of the target space on the basis of the first constraint condition, the second constraint condition, and the third constraint condition.

2.  The information processing device according to claim 1, wherein
    the generation unit generates an objective function for calculating the degree of instability of the target space, and
    the determination unit determines the cargo arrangement that minimizes the degree of instability of the target space using an energy function that uses the first constraint condition, the second constraint condition, the third constraint condition, and the objective function.

3.  The information processing device according to claim 2, wherein
    the determination unit inputs the energy function to an Ising machine, and determines the cargo arrangement that minimizes the degree of instability of the target space using a solution result obtained by the Ising machine.

4.  The information processing device according to claim 1, wherein
    the reception unit receives loading and unloading information in which a number of cargos to be loaded for each of a plurality of loading locations and a number of cargos to be unloaded for each of a plurality of unloading locations are associated with each other, and load information regarding the maximum load capacity for each of the plurality of sections in the space information, and
    the generation unit generates the first constraint condition, the second constraint condition, and the third constraint condition according to the space information, the loading and unloading information, and the load information.

**5.** An optimization method implemented by a computer, the method comprising:

receiving space information regarding a target space in which a cargo is placed, the space information being divided into a plurality of sections and defining a route between the plurality of sections and a route from each of the plurality of sections to an entrance;

generating, according to the space information, a first constraint condition indicating that there is no other cargo on a route from the cargo to be loaded or to be unloaded to the entrance during loading or unloading of the cargo, a second constraint condition indicating a number of cargos to be loaded and a number of cargos to be unloaded, and a third constraint condition indicating a maximum load capacity of each of the plurality of sections; and

determining a cargo arrangement that optimizes a degree of instability of the target space on the basis of the first constraint condition, the second constraint condition, and the third constraint condition.

**6.** An optimization program comprising instructions which, when the program is executed by a computer, cause the computer to carry out processing, the processing comprising:

receiving space information regarding a target space in which a cargo is placed, the space information being divided into a plurality of sections and defining a route between the plurality of sections and a route from each of the plurality of sections to an entrance;

generating, according to the space information, a first constraint condition indicating that there is no other cargo on a route from the cargo to be loaded or to be unloaded to the entrance during loading or unloading of the cargo, a second constraint condition indicating a number of cargos to be loaded and a number of cargos to be unloaded, and a third constraint condition indicating a maximum load capacity of each of the plurality of sections; and

determining a cargo arrangement that optimizes a degree of instability of the target space on the basis of the first constraint condition, the second constraint condition, and the third constraint condition.

**7.** The information processing device according to claim 1, further comprising:

wherein the processing further including:

an acquisition unit configured to acquire loading-and-unloading information indicating locations as well as an order of the locations, the locations being locations through which a moving body which carries the cargo passes, the locations including a location into which the cargo is loaded and a location from which the cargo is unloaded; and

a specifying unit configured to specify a first timing and a second timing by using the loading-and-unloading information and the space information, the first timing being a timing at which a load capacity of the cargo in the target space is at a minimum, the second timing being a timing at which the load capacity of the cargo in the target space is at a maximum,

wherein the generation unit is configured to

generate, according to the space information, the first constraint condition indicating that there is no other cargo on a route from the cargo to be loaded or to be unloaded to the entrance during loading or unloading of the cargo, the first constraint condition defining a condition for changing the route before and after the first timing,

generate, according to the space information, the second constraint condition indicating a number of cargos to be loaded and a number of cargos to be unloaded,

generate, according to the space information, the third constraint condition indicating a maximum load capacity of each of the plurality of sections, the third constraint condition defining that the maximum load capacity is satisfied at the second timing at which the load capacity of the cargo in the target space is at a maximum, and

wherein the determination unit is configured to determine an arrangement of the cargo that optimizes a degree of instability of the target space by using the first constraint condition, the second constraint condition, and the third constraint condition.

**8.** The information processing device according to claim 7, wherein,

the specifying unit is configured to, in a case that there is a plurality of the locations from which the cargo is unloaded before the location into which the cargo is loaded in the loading-and-unloading information, specify a boundary where switching from the location from which the cargo is unloaded to the location into which the cargo is loaded occurs, and group the order of the locations before and after the boundary, and

the generation unit is configured to generate, for each group of the order of the locations, the first constraint condition, the second constraint condition, and the third constraint condition.

9. The information processing device according to claim 7 or 8, wherein
the specifying unit is configured to specify a concurrent location that is a location where loading of the cargo and unloading of the cargo are both performed from the loading and unloading information, and
the generation unit is configured to

divide the concurrent location into two locations which are a first location into which the cargo is loaded and a second location from which the cargo is unloaded, the two locations being continuous, and
generate the first constraint condition, the second constraint condition, and the third constraint condition by replacing the concurrent location with the two locations in the order of the locations.

10. The optimization method according to claim 5,
acquiring loading-and-unloading information indicating locations as well as an order of the locations, the locations being locations through which a moving body which carries the cargo passes, the locations including a location into which the cargo is loaded and a location from which the cargo is unloaded; and
specifying a first timing and a second timing by using the loading-and-unloading information and the space information, the first timing being a timing at which a load capacity of the cargo in the target space is at a minimum, the second timing being a timing at which the load capacity of the cargo in the target space is at a maximum,
wherein the generating of the first constraint condition is configured to generate, according to the space information, the first constraint condition indicating that there is no other cargo on a route from the cargo to be loaded or to be unloaded to the entrance during loading or unloading of the cargo, the first constraint condition defining a condition for changing the route before and after the first timing,
wherein the generating of the second constraint condition is configured to generate, according to the space information, the second constraint condition indicating a number of cargos to be loaded and a number of cargos to be unloaded,
wherein the generating of the third constraint condition is configured to generate, according to the space information, the third constraint condition indicating a maximum load capacity of each of the plurality of sections, the third constraint condition defining that the maximum load capacity is satisfied at the second timing at which the load capacity of the cargo in the target space is at a maximum, and
wherein the determining is configured to determine an arrangement of the cargo that optimizes a degree of instability of the target space by using the first constraint condition, the second constraint condition, and the third constraint condition.

11. The optimization program according to claim 6, the processing further comprising:

acquiring loading-and-unloading information indicating locations as well as an order of the locations, the locations being locations through which a moving body which carries the cargo passes, the locations including a location into which the cargo is loaded and a location from which the cargo is unloaded; and
specifying a first timing and a second timing by using the loading-and-unloading information and the space information, the first timing being a timing at which a load capacity of the cargo in the target space is at a minimum, the second timing being a timing at which the load capacity of the cargo in the target space is at a maximum,
wherein the generating of the first constraint condition is configured to generate, according to the space information, the first constraint condition indicating that there is no other cargo on a route from the cargo to be loaded or to be unloaded to the entrance during loading or unloading of the cargo, the first constraint condition defining a condition for changing the route before and after the first timing,
wherein the generating of the second constraint condition is configured to generate, according to the space information, the second constraint condition indicating a number of cargos to be loaded and a number of cargos to be unloaded,
wherein the generating of the third constraint condition is configured to generate, according to the space information, the third constraint condition indicating a maximum load capacity of each of the plurality of sections, the third constraint condition defining that the maximum load capacity is satisfied at the second timing at which the load capacity of the cargo in the target space is at a maximum, and

wherein the determining is configured to determine an arrangement of the cargo that optimizes a degree of instability of the target space by using the first constraint condition, the second constraint condition, and the third constraint condition.

EP 3 896 630 A1

## FIG. 1

19

# FIG. 2

INFORMATION PROCESSING DEVICE ⌇10

CONTROL UNIT ⌇20

RECEPTION UNIT ⌇21

FORMULATION UNIT ⌇22

OPTIMIZATION UNIT ⌇23

OUTPUT CALCULATION UNIT ⌇24

COMMUNICATION UNIT ⌇11

DISPLAY UNIT ⌇12

STORAGE UNIT ⌇13

SHIP INFORMATION ⌇14

VEHICLE LOADING AND UNLOADING TABLE ⌇15

# FIG. 3

| | BLOCK | | | DECK |
|---|---|---|---|---|
| S1 | | | | |
| 1 | 2 | 3 | 4 | 6 |
| 5 | 6 | 7 | 8 | 5 |
| 9 | 10 | 11 | 12 | 4 |
| ENTRANCE  13 | 14 | 15 | 16 | 3 |
| | 17 | 18 | 19 | 2 |
| 20 | 21 | 22 | | 1 |

S2    S3

# FIG. 4

# FIG. 5

| UNLOADING PORT | LOADING PORT | | |
|---|---|---|---|
| | A | B | C |
| D | (1) 800 | (2) 400 | (3) 1300 |
| E | (4) 600 | (5) 100 | (6) 500 |
| F | (7) 1100 | (8) 1600 | (9) 200 |

# FIG. 6

# FIG. 7

$$z_1 = x_{1111}, z_2 = x_{1112}, \cdots$$

⇓

$$z_n = 0 \; (\forall n) \; : \; (00000000000000000000000000000000000000\cdots\cdots0000000000)$$

⇓

$$(00000000000011100111000010000001100100\cdots\cdots1011101000)$$
$$z_1 = 0, z_2 = 0, \cdots, z_{13} = 1, \cdots \qquad\qquad \cdots (12)$$

VEHICLE LOADING AND
UNLOADING TABLE

|   | i |   |   |
|---|---|---|---|
| j | 1 | 2 | 3 |
| 1 | (1) | (2) | (3) |
| 2 | (4) | (5) | (6) |
| 3 | (7) | (8) | (9) |

⇓

⟹ $\quad c = i + M \, (\, j\text{-}1)$

# FIG. 8

VEHICLE LOADING AND
UNLOADING TABLE

| UNLOADING PORT | LOADING PORT | | |
|---|---|---|---|
| | A | B | C |
| D | (1) 800 | (2) 400 | (3) 1300 |
| E | (4) 600 | (5) 100 | (6) 500 |
| F | (7) 1100 | (8) 1600 | (9) 200 |

VEHICLE
ARRANGEMENT

| BLOCK | | | | | | | | | | | | DECK |
|---|---|---|---|---|---|---|---|---|---|---|---|---|
| (1) | (1) | (1) | (3) | (3) | (3) | (3) | (1) | (1) | (1) | (1) | (1) | 6 |
| (9) | (9) | (3) | (3) | (3) | (3) | (3) | (3) | (2) | (2) | (2) | (2) | 5 |
| (5) | (6) | (6) | (6) | (6) | (6) | (4) | (4) | (4) | (4) | (4) | (4) | 4 |
| (3) | (3) | (3) | (8) | (8) | (8) | (8) | (8) | (8) | (8) | (8) | (8) | 3 |
| | | | (8) | (8) | (8) | (8) | (8) | (8) | (8) | (7) | (7) | 2 |
| | | | (7) | (7) | (7) | (7) | (7) | (7) | (7) | (7) | (7) | 1 |

出入口

# FIG. 9

START

IS PROCESSING STARTED? — S101

NO

YES

ACQUIRE SHIP INFORMATION — S102

ACQUIRE VEHICLE LOADING AND UNLOADING TABLE — S103

GENERATE RESPECTIVE CONSTRAINT CONDITIONS — S104

GENERATE OBJECTIVE FUNCTION — S105

SOLVING BY OPTIMIZATION DEVICE — S106

CALCULATE VEHICLE ARRANGEMENT REPRESENTED BY SOLUTION — S107

OUTPUT VEHICLE ARRANGEMENT — S108

END

# FIG. 10

| UNLOADING PORT | LOADING PORT | | |
|---|---|---|---|
| | A | B | D |
| C | 500 | 300 | - |
| E | 600 | 100 | 200 |
| F | 1100 | 1600 | 100 |

# FIG. 11

| ORDER OF PORTS OF CALL | A | B | C | D | E | F |
|---|---|---|---|---|---|---|
| | LOADING | LOADING | UNLOADING | LOADING | UNLOADING | UNLOADING |

# FIG. 12

|  | LOADING | | i,p=a |
|---|---|---|---|
| UNLOADING | A | B | D |
| C | 300 | 300 | - |
| E | 600 | 100 | 200 |
| F | 1100 | 1600 | 100 |

j,q=b · B · N · M · A

| ORDER OF PORTS OF CALL | A | B | C | D | E | F |
|---|---|---|---|---|---|---|
|  | LOADING | LOADING | UNLOADING | LOADING | UNLOADING | UNLOADING |

b · a · A · B

FIG. 13

| | PRE-MINIMUM PORT | POST-MINIMUM PORT | | | PRE-MINIMUM PORT | POST-MINIMUM PORT | |
|---|---|---|---|---|---|---|---|
| | | | | | | | |
| | | | b | a | | | d | c | |
| ORDER OF PORTS OF CALL | A | B | C | D | E | F | G | H | I | J |
| | LOADING | LOADING | UNLOADING | UNLOADING | LOADING | LOADING | UNLOADING PORT | UNLOADING | LOADING | UNLOADING |

## FIG. 14

| | LOADING PORT $i,p=a$ | | |
|---|---|---|---|
| UNLOADING PORT | A | B | D |
| C | 300 | 200 | - |
| E | 600 | 100 | 200 |
| F | 1100 | 1600 | 100 |

$j,q=b$ (row C)

Q, P

| ORDER OF PORTS OF CALL | A | B | C | D | E | F |
|---|---|---|---|---|---|---|
| | LOADING | LOADING | UNLOADING | LOADING | UNLOADING | UNLOADING |

# FIG. 15

| ORDER OF PORTS OF CALL | PATH: 1 | | | | PATH: 2 | | | | PATH: 3 | |
|---|---|---|---|---|---|---|---|---|---|---|
| | | | | b | a | | | d | c | |
| | A | B | C | D | E | F | G | H | I | J |
| | LOADING | LOADING | UNLOADING | UNLOADING | LOADING | LOADING | UNLOADING | UNLOADING | LOADING | UNLOADING |

FIG. 16

| UNLOADING PORT | LOADING PORT i,p=a | | | |
|---|---|---|---|---|
| | A | B | $C_L$ | D |
| $C_D$ | 500 | 300 | - | - |
| E | 600 | 100 | 300 | 200 |
| F | 1100 | 1600 | 100 | 100 |

| UNLOADING PORT | A | B | $C_D$ | $C_L$ | D | E | F |
|---|---|---|---|---|---|---|---|
| | LOADING | LOADING | UNLOADING | LOADING | LOADING | UNLOADING | UNLOADING |

FIG. 17

| | LOADING PORT | | i,p=a | |
|---|---|---|---|---|
| UNLOADING PORT | A | B | $C_L$ | D |
| $C_D$ (j,q=b) | 500 | 300 | - | - |
| E | 600 | 100 | 300 | 200 |
| F | 1100 | 1600 | 100 | 100 |

| UNLOADING PORT | A | B | $C_D$ | $C_L$ | D | E | F |
|---|---|---|---|---|---|---|---|
| | LOADING | LOADING | UNLOADING | LOADING | LOADING | UNLOADING | UNLOADING |

# FIG. 18

```
                    ┌─────────────┐
                    │    START    │
                    └──────┬──────┘
                           │
         ┌─────────────────▼─────────────────┐
    NO   ◄                                   ╲  S201
  ┌──────┤       IS PROCESSING STARTED?       ├
  │      ╲                                   ╱
  │       └─────────────────┬─────────────────┘
  │                         │ YES
  │                         ▼
  │      ┌─────────────────────────────────────┐
  │      │      ACQUIRE SHIP INFORMATION        │── S202
  │      └─────────────────┬───────────────────┘
  │                        ▼
  │      ┌─────────────────────────────────────┐
  │      │ ACQUIRE VEHICLE LOADING AND UNLOADING TABLE │── S203
  │      └─────────────────┬───────────────────┘
  │                        ▼
  │      ┌─────────────────────────────────────┐
  │      │ DETERMINE DELIMITING POINT IN ORDER OF PORTS │── S204
  │      │              OF CALL                 │
  │      └─────────────────┬───────────────────┘
  │                        ▼
  │      ┌─────────────────────────────────────┐
  │      │    SUBDIVIDE CONDITION ON THE BASIS OF     │── S205
  │      │ DELIMITING POINT IN ORDER OF PORTS OF CALL │
  │      └─────────────────┬───────────────────┘
  │                        ▼
  │      ┌─────────────────────────────────────┐
  │      │ GENERATE RESPECTIVE CONSTRAINT CONDITIONS IN │── S206
  │      │ ACCORDANCE WITH SUBDIVIDED CONDITION  │
  │      └─────────────────┬───────────────────┘
  │                        ▼
  │      ┌─────────────────────────────────────┐
  │      │     GENERATE OBJECTIVE FUNCTION      │── S207
  │      └─────────────────┬───────────────────┘
  │                        ▼
  │      ┌─────────────────────────────────────┐
  │      │     SOLVING BY OPTIMIZATION DEVICE   │── S208
  │      └─────────────────┬───────────────────┘
  │                        ▼
  │      ┌─────────────────────────────────────┐
  │      │ CALCULATE VEHICLE ARRANGEMENT REPRESENTED │── S209
  │      │              BY SOLUTION             │
  │      └─────────────────┬───────────────────┘
  │                        ▼
  │      ┌─────────────────────────────────────┐
  │      │      OUTPUT VEHICLE ARRANGEMENT      │── S210
  │      └─────────────────┬───────────────────┘
  │                        ▼
  │                 ┌─────────────┐
  │                 │     END     │
  │                 └─────────────┘
```

# FIG. 19

INFORMATION PROCESSING DEVICE ⌇10

MEMORY ⌇10c

PROCESSOR ⌇10d

COMMUNICATION UNIT ⌇10a

HDD ⌇10b

Europäisches
Patentamt

European
Patent Office

Office européen
des brevets

# EUROPEAN SEARCH REPORT

Application Number

EP 21 16 3961

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Masataka Sao ET AL: "Application of digital annealer for faster combinatorial optimization", Fujitsu scientific & technical journal, 31 December 2019 (2019-12-31), pages 45-51, XP055835973, ?? Retrieved from the Internet: URL:https://www.fujitsu.com/global/documents/about/resources/publications/fstj/archives/vol55-2/paper12.pdf [retrieved on 2021-08-30] * page 45 - page 46; figure 1 * ----- | 1-11 | INV. G06Q10/08 G06Q10/04 G06Q50/28 |
| | | | TECHNICAL FIELDS SEARCHED (IPC) G06Q |

The present search report has been drawn up for all claims

| Place of search | Date of completion of the search | Examiner |
|---|---|---|
| Munich | 30 August 2021 | Diaz Calvo, Sonia |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
..............................................................................
& : member of the same patent family, corresponding
document

EPO FORM 1503 03.82 (P04C01)

**EP 3 896 630 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10305929 A
- JP 2005112609 A
- JP 1127526 A